Europäisches Patentamt

European Patent Office

Office européen des brevets

(11) Numéro de publication: **0 362 087**
**A1**

## (12) DEMANDE DE BREVET EUROPEEN

(21) Numéro de dépôt: 89420362.9

(22) Date de dépôt: 25.09.89

(51) Int. Cl.5 **F16B 45/02 , A63B 29/02**

(30) Priorité: 28.09.88 FR 8812924

(43) Date de publication de la demande:
**04.04.90 Bulletin 90/14**

(84) Etats contractants désignés:
**AT BE CH DE ES FR GB GR IT LI LU NL SE**

(71) Demandeur: **ALPCAN**
**86, Grande Rue de la Croix-Rousse**
**F-69004 Lyon(FR)**

(72) Inventeur: **Fister, Christian**
**6, Place de la Croix Rousse**
**F-69004 Lyon(FR)**
Inventeur: **Grasset, Yves**
**20 rue Martin Basse**
**F-69300 Caluire(FR)**

(74) Mandataire: **Maureau, Philippe et al**
**Cabinet GERMAIN & MAUREAU BP 3011**
**F-69392 Lyon Cédex 03(FR)**

(54) **Mousqueton.**

(57) Ce mousqueton est du type comprenant un corps (2) en forme générale de C, à l'une des extrémités duquel est articulé un bras de fermeture (4) soumis à l'action d'un ressort (5) le maintenant en position fermée.

Selon l'invention, il comporte des moyens (12) destinés à assurer le maintien du bras en position ouverte, à l'encontre de l'action du ressort (5), et susceptibles d'être libérés pour permettre le basculement automatique du bras (4) vers sa position de fermeture, lors de l'introduction à l'intérieur du corps du mousqueton de l'élément à y accrocher.

Application à la réalisation de mousquetons pour la pratique de l'alpinisme.

FIG.3

# MOUSQUETON

La présente invention a pour objet un mousqueton, et plus particulièrement mais non exclusivement, un mousqueton utilisé par les alpinistes ou les grimpeurs pour réaliser, en montagne, leur assurance à l'aide d'une corde.

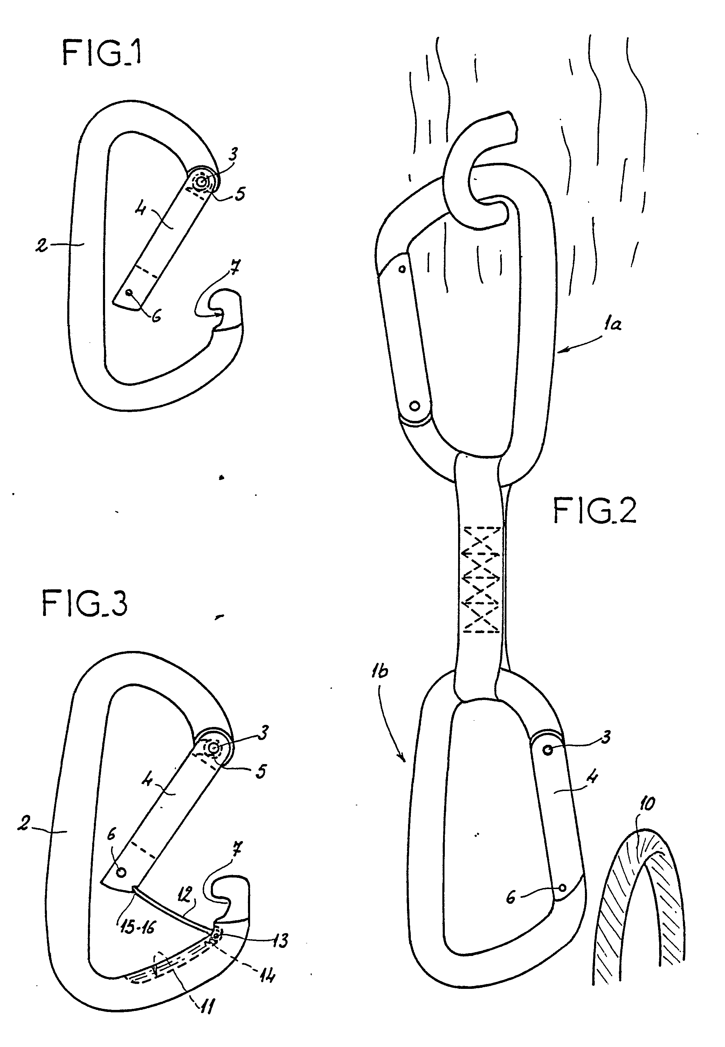

La figure 1 du dessin schématique annexé représente un mousqueton de type connu comportant un corps **2** en forme générale de C, à l'une des extrémités duquel est articulé, autour d'un axe **3**, un bras **4**, ce bras **4** étant soumis à l'action d'un ressort **5** destiné à le faire basculer vers sa position de fermeture, dans laquelle son autre extrémité coopère avec l'autre extrémité du corps, le bras et le corps possèdant, à cet effet, un doigt **6** et une encoche **7** complémentaires.

Lors d'une ascension, un grimpeur doit, pour s'assurer, accrocher un premier mousqueton **1a** à un anneau **8** fixé au rocher, ce premier mousqueton **1a** étant rendu solidaire par une sangle d'un second mousqueton **1b** de même type. Pour s'assurer, le grimpeur doit passer une boucle de corde **10** dans le deuxième mousqueton qui est normalement maintenu en position de fermeture par le ressort qui lui est associé. Le grimpeur, ne disposant pour effectuer cette opération que d'une seule main, et se trouvant souvent dans une position instable et dangereuse, une telle manoeuvre n'est pas sans présenter des difficultés.

Le but de la présente invention est de fournir un mousqueton du type précité, dans lequel le mouvement d'accrochage de l'élément à accrocher au mousqueton, par exemple la boucle d'une corde, soit effectué de façon simple et rapide, sans difficultés pour l'utilisateur.

A cet effet, ce mousqueton, du type comprenant un corps en forme générale de C, à l'une des extrémités duquel est articulé un bras de fermeture soumis à l'action d'un ressort le maintenant en position fermée, est caractérisé en ce qu'il comporte des moyens destinés à assurer le maintien du bras en position ouverte, à l'encontre de l'action du ressort, et susceptibles d'être libérés pour permettre le basculement automatique du bras vers sa position de fermeture, lors de l'introduction à l'intérieur du corps du mousqueton de l'élément à y accrocher.

En pratique, le mousqueton devant recevoir l'élément à accrocher, par exemple destiné au passage d'une boucle de corde, est préparé de telle sorte que son bras soit maintenu en position ouverte. Du fait de cette position ouverte du bras, l'extrémité du corps sur laquelle n'est pas articulé le bras, forme un crochet sur lequel peut être engagée rapidement la boucle de corde. Au cours de cet engagement de la boucle sur le crochet, la boucle actionne les moyens de maintien du bras en position ouverte, et provoque l'escamotage de ceux-ci, de telle sorte que le bras bascule automatiquement en position de fermeture.

Selon une forme préférée d'exécution de ce mousqueton, les moyens destinés à assurer le maintien du bras en position ouverte, sont constitués par une languette montée articulée par une de ses extrémités sur le corps autour d'un axe parallèle à l'axe d'articulation du bras, cette languette étant normalement plaquée contre le corps, ou encastrée dans celui-ci, et possèdant une partie destinée à coopérer avec l'extrémité libre du bras pour maintenir celui-ci en position d'ouverture.

C'est donc l'action directe de la boucle de corde ou autre élément à accrocher sur la languette qui provoque le basculement de celle-ci et, par suite, la libération du bras vers sa position de fermeture.

La languette peut être montée articulée à l'intérieur d'une rainure ménagée dans le corps pour s'escamoter totalement à l'intérieur de celui-ci, ou au contraire posséder une section en arc de cercle et venir en recouvrement du corps.

La languette peut être montée articulée à proximité de l'extrémité du corps ne servant pas à l'articulation du bras, ou également être montée articulée dans la partie centrale du corps, la languette et l'extrémité libre du bras présentant, dans les deux cas, des moyens d'appui complémentaires assurant, lorsqu'ils sont en contact l'un avec l'autre, leur maintien en position basculée vers l'intérieur du mousqueton.

De toute façon, l'invention sera bien comprise à l'aide de la description qui suit, en référence au dessin schématique annexé représentant, à titre d'exemples non limitatifs, deux formes d'exécution de ce mousqueton :

Figure 1 est une vue de côté d'un mousqueton traditionnel;

Figure 2 est une vue de côté de deux mousquetons traditionnels reliés l'un à l'autre par une sangle lors de leur utilisation pour assurer un grimpeur;

Figure 3 est une vue de côté d'une première forme d'exécution du mousqueton selon l'invention;

Figure 4 est une vue similaire à figure 2, de deux mousquetons associés l'un à l'autre pour réaliser l'assurance d'un grimpeur;

Figures 5 à 7 sont trois vues correspondant à une partie de figure 4 au cours de trois phases d'utilisation du mousqueton;

Figure 8 est une vue d'une variante d'exécution du mousqueton de figure 3;

Figure 9 est une vue de côté d'une autre forme d'exécution de ce mousqueton.

Le mousqueton, représenté à la figure 3, est du type général du mousqueton représenté aux figures 1 et 2, les mêmes éléments étant désignés par les mêmes références qu'à ces figures.

Selon la caractéristique essentielle de ce mousqueton, celui-ci comprend, dans sa partie adjacente à l'extrémité du corps sur laquelle n'est pas articulé le bras, une rainure 11 tournée vers l'intérieur, dans laquelle est montée une languette 12 articulée autour d'un axe 13 parallèle à l'axe 3 d'articulation du bras. L'articulation de la languette 12 est réalisée à l'extrémité de celle-ci située du côté de l'ouverture du mousqueton. La languette est, en outre, associée à un ressort 14 la maintenant normalement en position escamotée à l'intérieur de la rainure 11.

La longueur de la languette 12 est telle que, lorsqu'elle est en position basculée vers l'intérieur du mousqueton, son extrémité vienne en appui contre l'extrémité du bras 4, lui-même basculé vers l'intérieur du mousqueton.

L'extrémité libre de la languette 12 présente une forme de fourche 15 destinée à venir s'engager dans un évidement 16 ménagé à proximité de l'extrémité du bras 4. Dans ces conditions, il est possible, par coopération des extrémités du bras 4 et de la languette 12, d'assurer le maintien de ces deux éléments en position basculée vers l'intérieur du mousqueton, à l'encontre de l'action des ressorts qui leur sont respectivement associés.

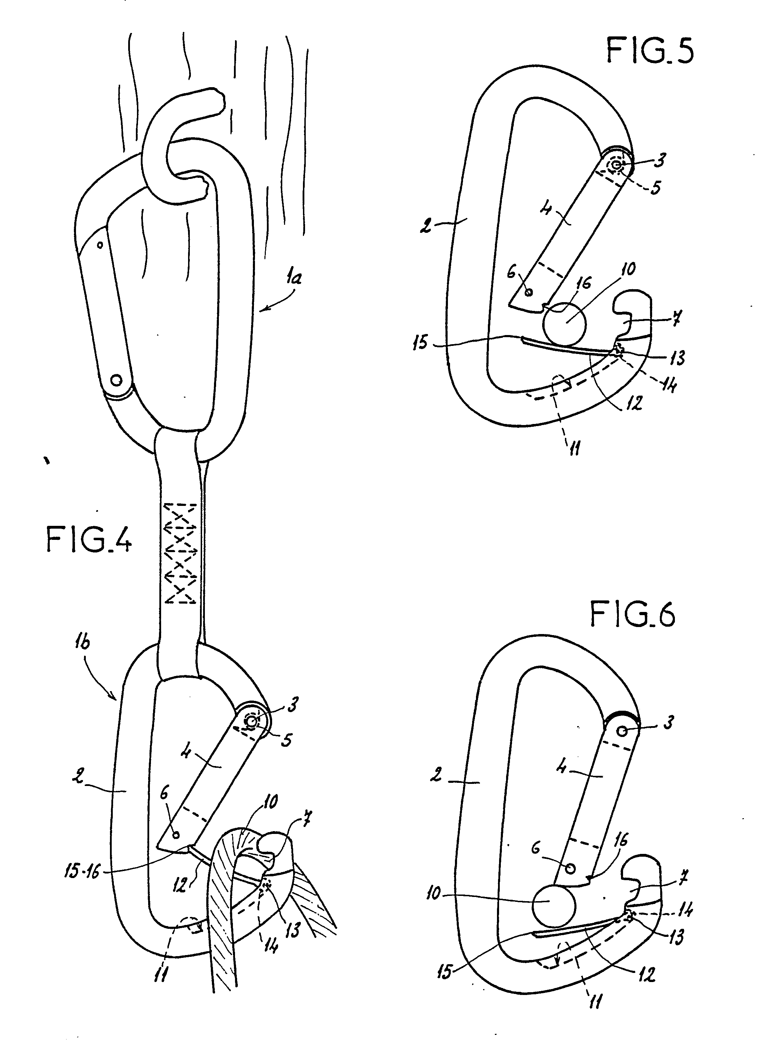

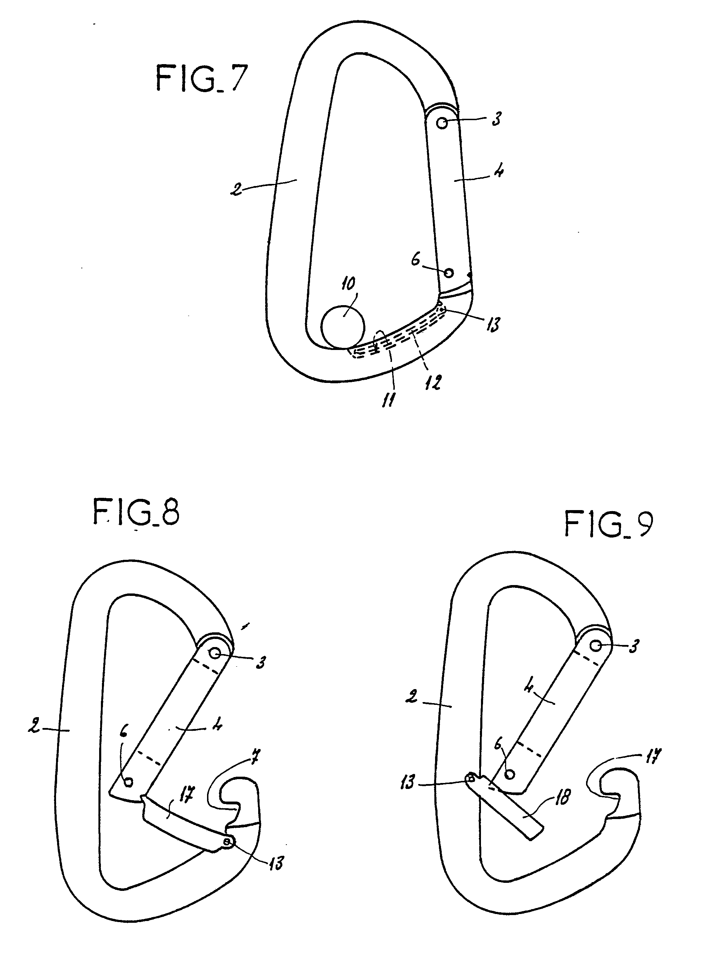

L'utilisation d'un tel mousqueton par un grimpeur est représentée aux figures 4 à 7. Le mousqueton 1b, sur lequel doit être engagée la boucle de corde 10, est préparée, comme montré à la figure 4, de telle sorte que le bras 4 soit basculé vers l'intérieur. L'une des extrémités du corps du mousqueton forme donc un crochet sur lequel le grimpeur peut très facilement engager la boucle de corde 10, comme montré à la figure 4. Lors de la poursuite de ce mouvement, la boucle de corde prend appui sur la languette 12, provoquant son basculement par rapport au bras 4, comme montré aux figures 4 et 6, les ressorts associés, respectivement, au bras 4 et à la languette 12 pouvant alors librement jouer pour provoquer le basculement du bras 4 vers sa position de fermeture, et le basculement de la languette 12 vers sa position escamotée, de telle sorte que le mousqueton occupe la position représentée à la figure 7, dans laquelle il remplit la même fonction qu'un mousqueton traditionnel.

Il est à noter la simplicité de la manoeuvre pour l'utilisateur, puisque celui-ci n'a pas eu, pour réaliser l'engagement de la boucle de corde à l'intérieur du mousqueton, à procéder au basculement du bras 4 vers l'intérieur.

La figure 8 représente une variante de réalisation de ce mousqueton dans laquelle la languette 17 présente une section en arc de cercle, et est non pas encastrée dans une rainure ménagée dans le corps du mousqueton, mais vient en recouvrement de ce corps.

La figure 9 représente une variante d'exécution dans laquelle une languette 18 est articulée non plus à proximité d'une extrémité du corps, mais sur la partie centrale du corps. Dans ce cas encore, l'extrémité libre du bras et la languette 18 comportent des moyens d'appui complémentaires en creux et en relief assurant leur maintien en position basculée vers l'intérieur du mousqueton lorsqu'ils sont en appui l'un contre l'autre.

Comme il va de soi, l'invention ne se limite pas aux seules formes d'exécution de ce mousqueton, ni à sa seule application à la pratique de la montagne, décrites ci-dessus à titre d'exemples; elle en embrasse, au contraire, toutes les variantes.

**Revendications**

1. - Mousqueton, du type comprenant un corps (2) en forme générale de C, à l'une des extrémités duquel est articulé un bras de fermeture (4) soumis à l'action d'un ressort (5) le maintenant en position fermée, caractérisé en ce qu'il comporte des moyens (12) destinés à assurer le maintien du bras en position ouverte, à l'encontre de l'action du ressort (5), et susceptibles d'être libérés pour permettre le basculement automatique du bras (4) vers sa position de fermeture, lors de l'introduction à l'intérieur du corps du mousqueton de l'élément à y accrocher.

2. - Mousqueton selon la revendication 1, caractérisé en ce que les moyens destinés à assurer le maintien du bras en position ouverte, sont constitués par une languette (12) montée articulée par une de ses extrémités sur le corps autour d'un axe (13) parallèle à l'axe d'articulation du bras, cette languette étant normalement plaquée contre le corps, ou encastrée dans celui-ci, et possédant une partie destinée à coopérer avec l'extrémité libre du bras pour maintenir celui-ci en position d'ouverture.

3. - Mousqueton selon la revendication 2, caractérisé en ce que la languette (12) est montée articulée à l'intérieur d'une rainure (11) ménagée dans le corps et est susceptible de s'escamoter à l'intérieur de celle-ci.

4. - Mousqueton selon la revendication 2, caractérisé en ce que la languette (17) possède une section en arc de cercle, est articulée sur l'extérieur du corps, et est destinée à coiffer celui-ci lorsqu'elle est en position escamotée.

5. - Mousqueton selon l'une quelconque des revendications 2 à 4, caractérisé en ce que la languette (12, 17) est articulée sur le corps (2) à proximité de l'extrémité de celui-ci ne servant pas à l'articulation du bras (4), la languette et le bras étant munis, à proximité de leurs extrémités libres respectives de moyens d'appui complémentaires (1 5, 16) en creux et en relief.

6. - Mousqueton selon l'une quelconque des revendications 2 à 4, caractérisé en ce que la languette (18) est articulée sur le corps (2) dans la partie centrale de celui-ci, la languette et le corps étant munis de moyens d'appui complémentaires en creux et en relief au niveau de leurs zones de contact respectives, lorsqu'ils sont en position pivotée vers l'intérieur du corps.

7. - Mousqueton selon l'une quelconque des revendications 2 à 6, caractérisé en ce que la languette (12, 17, 18) est associée a un ressort (14) la maintenant normalement en position escamotée.

# FIG.1

# FIG.2

# FIG.3

EP 0 362 087 A1

# FIG.5

# FIG.4

# FIG.6

FIG.7

FIG.8

FIG.9

Office européen
des brevets

**RAPPORT DE RECHERCHE EUROPEENNE**

Numero de la demande

EP  89 42 0362

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-U-8 706 660  (BÜRKLE)<br>* Figures 1-3; revendications 1-2 * | 1 | F 16 B  45/02<br>A 63 B  29/02 |
| A | DE-A-3 347 725  (JANSEN)<br>* Figures 1-4; page 5, lignes 1-24 * | 1 | |
| A | FR-A-2 485 658  (ETS. FOIN & CIE)<br>* Figures; page 2, ligne 40 - page 3, ligne 9 * | 1 | |
| A | DE-B-1 261 402  (STEINBICHLER)<br>* Figures 1-2; colonne 2, lignes 35-46 * | 1 | |

---

DOMAINES TECHNIQUES RECHERCHES (Int. Cl.5)

F 16 B

**Le présent rapport a été établi pour toutes les revendications**

| Lieu de la recherche | Date d'achèvement de la recherche | Examinateur |
|---|---|---|
| LA HAYE | 29-12-1989 | JONES T.M. |

EPO FORM 1503 03.82 (P0402)